(19) **Europäisches Patentamt**

**European Patent Office**

**Office européen des brevets**

(11) **EP 1 173 500 B1**

(12) **EUROPÄISCHE PATENTSCHRIFT**

(45) Veröffentlichungstag und Bekanntmachung des Hinweises auf die Patenterteilung:
**18.08.2004 Patentblatt 2004/34**

(51) Int Cl.[7]: **C08G 75/02**, C08G 85/00

(21) Anmeldenummer: **00926742.8**

(22) Anmeldetag: **20.03.2000**

(86) Internationale Anmeldenummer:
**PCT/EP2000/002451**

(87) Internationale Veröffentlichungsnummer:
**WO 2000/061659 (19.10.2000 Gazette 2000/42)**

(54) **VERFAHREN UND VORRICHTUNG ZUR ABTRENNUNG VON FESTSTOFFEN AUS POLYMERLÖSUNGEN**

METHOD AND DEVICE FOR SEPARATING SOLIDS FROM POLYMER SOLUTIONS

PROCEDE ET DISPOSITIF POUR SEPARER DES MATIERES SOLIDES CONTENUES DANS DES SOLUTIONS DE POLYMERES

(84) Benannte Vertragsstaaten:
**DE FR GB IT**

(30) Priorität: **08.04.1999 DE 19915705**

(43) Veröffentlichungstag der Anmeldung:
**23.01.2002 Patentblatt 2002/04**

(73) Patentinhaber: **Ticona GmbH**
**65451 Kelsterbach (DE)**

(72) Erfinder:
• **HAUBS, Michael**
**D-55545 Bad Kreuznach (DE)**
• **WAGENER, Reinhard**
**D-65719 Hofheim (DE)**

(56) Entgegenhaltungen:
**EP-A- 0 498 219        DD-A- 241 368**
**US-A- 4 290 998**

**Beschreibung**

Die Erfindung betrifft ein Verfahren und eine Vorrichtung zur Trennung von Polymeren in Lösung und in der Lösung unlöslichen Feststoffen. Weiter betrifft die Erfindung die Trennung von schwefelhaltigen Polymeren und ungelösten Feststoffen.

Bei der Herstellung von Polymeren durch Polykondensation entstehen häufig, gegebenenfalls in einer anschließenden Neutralisationsreaktion, Feststoffe als Nebenprodukte. Dies gilt beispielsweise für die Herstellung von Polyphenylensulfid (PPS) aus Natriumsulfid und p-Dichlorbenzol in einem polaren Lösemittel gemäß der vereinfachten Reaktionsgleichung:

$$Na_2S + C_6H_4Cl_2 \rightarrow [-C_6H_4-S-] + 2\ NaCl$$

Nach bekannten Verfahren wird das in der Reaktionsmischung unlösliche Nebenprodukt Natriumchlorid nach der Reaktion durch wiederholtes Waschen mit Wasser und anschließender Filtration des Polymers entfernt. Diese und verwandte Verfahren für andere Hochleistungspolymere wie Polyaramide, Poly(ether)sulfone oder Polyetherketone haben jedoch den Nachteil, daß große Mengen salzhaltigen Abwassers anfallen.

Die DD-A-241 368 beschreibt eine Vorrichtung zur Abtrennung von wasserlöslichen Feststoffen. Dabei wird ungelöster Feststoff aus einer Epoxidharzlösung durch ein kombiniertes Verfahren aus Sedimentation und Auflösung des Feststoffes in Wasser abgetrennt. Die offenbarte Vorrichtung weist im Betrieb im Mittelteil eine Phasengrenzfläche zwischen der nicht-wassermischbaren Polymerlösung oben und dem Wasser als Extraktionsmittel für den Feststoff unten auf. Trennprozesse mit dieser Vorrichtung erzeugen folglich verdünnte, wäßrige Salzlösungen.

Für die Salzabtrennung von PPS und einem polaren Lösemittel wird in EP-A-0 220 490 eine heiße Filtration oder Zentrifugation bei Temperaturen von über 210 °C beschrieben. Diese Verfahrensweise hat jedoch in der technischen Umsetzung den Nachteil, daß Filterapparate oder Zentrifugen für diesen Temperaturbereich aufwendige Konstruktionen erfordern. Die Abdichtung bewegter, insbesondere schnell rotierender Apparateteile bereitet bei T > 210 °C und den dabei auftretenden Drücken Schwierigkeiten.

WO-A-96 11 968 beschreibt die Abtrennung von unlöslichen Feststoffen von gelösten Polymeren, um gefüllte Polymere wiederzugewinnen. Danach werden die Feststoffe, zum Beispiel Glasfasern, durch Filtration von der Polymerlösung abgetrennt. Die bekannten Verfahren sind aber verbesserungsbedürftig, da verdünnte Waschlaugen anfallen und die Entfernung des Festoffes aus den Filterapparaten insbesondere bei hohen Temperaturen unter Druck schwierig ist.

Die Aufgabe der vorliegenden Erfindung besteht darin, ein Verfahren und eine Vorrichtung bereitzustellen, wobei Feststoffe von gelösten Polymeren getrennt werden und der ausgetragene Feststoff weitgehend von Polymeren befreit ist.

Die Aufgabe der vorliegenden Erfindung wird durch ein Verfahren zur Trennung eines gelösten Polymeren von Feststoffen gelöst, wobei der Feststoff durch Sedimentation abgetrennt wird und der sedimentierende Feststoff im Gegenstrom mit einem Lösungsmittel gewaschen wird.

Es wurde gefunden, daß sich Feststoffe von gelösten Polymeren durch Sedimentation abtrennen lassen. Erfindungsgemäß findet gleichzeitig im Sedimentator ein Waschprozeß statt, wodurch die durch das Anhaften von Polymerlösung am Feststoff eintretenden Verluste von Polymer minimiert werden können. Der Vorgang des Sedimentierens und Waschens kann in einer Vielzahl von Schritten oder Stufen wiederholt werden, bis ein vorgegebener Restanteil des Polymeren in der dem Feststoff anhaftenden Lösung erreicht ist.

Das erfindungsgemäße Verfahren ist auch bei hohen Temperaturen und Drücken einfach durchführbar. Das Trennverfahren läuft bevorzugt kontinuierlich ab, ohne daß verdünnte Waschlaugen anfallen. Die Polymerkonzentration im Sedimentatorüberlauf beträgt größer 50 %, bevorzugt größer 70 % der Eingangskonzentration.

Der Begriff Polymer schließt hier grundsätzlich alle makromolekularen, vorwiegend organischen Verbindungen ein, die sich gegebenenfalls bei erhöhter Temperatur unter Druck in einem Lösungsmittel lösen.

Besonders geeignet ist das erfindungsgemäße Verfahren für solche Polymere, bei deren Herstellung Feststoffe, beispielsweise Salze, als Nebenprodukte entstehen und abgetrennt werden müssen. Die Feststoffe können sich bei dem Polykondensationsprozeß direkt bilden oder bei einer nachträglichen Neutralisation von Säuren oder Basen entstehen. Beispiele für solche Prozesse sind die Herstellung von Polyaramiden aus Diaminen und Disäurechloriden, von Polycarbonaten aus Diphenolen oder Diphenolaten mit Phosgen, von Polysulfonen, Polyethersulfonen oder Polyetherketonen aus Diphenolaten und dihalogenierten aromatischen Kohlenwasserstoffen oder die Herstellung von Polyarylensifoxanen aus Diaryldichlorsilanen mit Diphenolaten.

Von besonderer Relevanz ist das erfindungsgemäße Verfahren für solche Polymere, die sich nur bei erhöhter Temperatur unter Druck lösen und bei denen die Abtrennung der Feststoffe daher apparativ aufwendig ist. Solche Polymere umfassen insbesondere schwefelhaltige Polymere.

Schwefelhaltige Polymere sind Polymere, die Arylensulfid Einheiten enthalten. Die Arylen-Bestandteile der Arylensulfid-Einheiten enthalten ein- oder mehrkemige Aromaten oder verbundene Aromaten. Die Aromaten können auch Heteroatome enthalten. Solche Aromaten, die substituiert oder unsubstituiert sein können, sind beispielsweise Benzol, Pyridin, Biphenyl, Naphthalin, Phenanthren. Substituenten sind zum Beispiel $C_1$-$C_6$-Alkyl-, $C_1$-$C_6$-Alkoxy-, Carboxyl-, Amino- und Sulfonsäure-Gruppen. Verbundene Aromaten sind zum Beispiel Biphenyl oder durch Etherbrücken verbundene Aromaten (Arylenether).

Bevorzugte schwefelhaltige Polymere sind Polyarylensulfide, insbesondere Polyphenylensulfid.

Als Feststoffe kommen alle Substanzen in Frage, die bei den Betriebsbedingungen des Sedimentators fest vorliegen und eine von der flüssigen Mischung unterschiedliche Dichte haben. Beispiele sind Salze, als Füller verwendete Substanzen wie Glasfasern, Kohlefasern, Titandioxid, Gips oder andere Feststoffe.

Salze können organisch oder anorganisch sein, das heißt aus einer beliebigen Kombination organischer oder anorganischer Kationen mit organischen oder anorganischer Anionen bestehen. Sie müssen im Reaktionsmedium zumindest teilweise unlöslich sein und eine von der flüssigen Reaktionsmischung unterschiedliche Dichte haben. Typische Vertreter anorganischer Salze sind die häufig als Nebenprodukt einer Polykondensation entstehenden Halogenide der Alkali- oder Erdalkalimetalle. Typische Vertreter organischer Salze sind Carboxylate der Alkalimetalle, der Erdalkalimetalle, des Ammoniums oder organisch substituierter Ammoniumkationen, die nach dem Stand der Technik zum Beispiel bei der Herstellung schwefelhaltiger Polymere als Promotoren eingesetzt werden. Unter Carboxylaten sind hierbei die Feststoffe aliphatischer Carbonsäuren, wie zum Beispiel der Essigsäure oder Propionsäure, oder aromatischer Carbonsäuren, beispielsweise der Benzoesäure, oder auch Feststoffe polyfunktioneller Carbonsäuren zu verstehen.

Zur Abtrennung der ungelösten Feststoffe eignen sich Vorrichtungen, die ein Waschen des ausgetragenen Feststoffes mit Lösungsmittel erlauben. Vorzugsweise wird für die Abtrennung eine Vorrichtung eingesetzt, die eine mehrstufige Wäsche des abzutrennenden Feststoffs im Gegenstrom ermöglicht, die auch bei erhöhten Drücken und Temperaturen einsetzbar ist und die eine effektive Wäsche des abzutrennenden Feststoffs mit kleinen Lösemittelmengen bewirkt, so daß keine stark verdünnten Polymerlösungen entstehen. Mit den im folgenden beschriebenen Sedimentationsvorrichtungen lassen sich diese Aufgaben erfüllen.

Die Polymerkonzentration der zu trennenden Mischung kann vorzugsweise bis zu 70 Gewichtsprozent betragen. Besonders bevorzugt sind 10 bis 50 Gewichtsprozent. Die Polymerkonzentration in der mit dem Feststoff ausgetragenen Flüssigkeit liegt bei 0 % bis 70 % der Eingangskonzentration, bevorzugt sind 0 % bis 10 % und besonders bevorzugt sind 0 % bis 5 %.

Die Sedimentation des unlöslichen Feststoffes erfolgt bei Temperaturen, bei denen die Polymere flüssig oder gelöst vorliegen. Bei Hochleistungspolymeren, die sich oft nur bei erhöhten Temperaturen lösen, werden die Sedimentatoren bei erhöhten Temperaturen und Drücken betrieben. Bevorzugt liegen die Temperaturen zwischen 50 °C und 300 °C und die Drücke bei 0 bar bis 50 bar.

Als Materialien für den Sedimentator eignen sich besonders Edelstahl, Titan oder Zirkon oder andere Materialien, die unter den Betriebsbedingungen mechanisch stabil sind und korrosiv nicht angegriffen werden.

Die Effektivität der Feststoffabtrennung durch Sedimentation hängt von der Korngröße und der Korngrößenverteilung des ungelösten Feststoffes, der Viskosität der Polymerlösung und dem Dichteunterschied zwischen Feststoff und flüssiger Phase ab.

Das zu trennende Gemisch kann das Reaktionsgemisch eines Polymerisationsansatzes sein, das einen ungelösten Feststoff enthält. Da die Viskosität mit wachsendem Umsatz der Polymerisationsreaktion zunimmt und die Korngröße des Feststoffes beim Durchmischen der Reaktionslösung abnimmt, kann es vorteilhaft sein, die Abtrennung des Feststoffes durch Sedimentation vorzunehmen, bevor das endgültige Molekulargewicht erreicht ist. Daher wird in einer bevorzugten Ausführung der Erfindung der Feststoff aus der Reaktionsmischung abgetrennt, bevor das gewünschte Molekulargewicht erreicht ist.

Erfindungsgemäß ist bevorzugt ein Verfahren zur Herstellung von Polymeren in einem Lösungsmittel, wobei

a) ein Polymer mit niedrigem Molekulargewicht in Lösung hergestellt wird,

b) der in der Reaktionsmischung ungelöste Feststoff durch Sedimentation abgetrennt und gewaschen wird und

c) die vom Feststoff befreite Mischung bis zum Erreichen eines bestimmten Molekulargewichtes weiter polymerisiert wird.

Die mittlere Molmasse der Polymeren, ausgedrückt durch das Gewichtsmittel $M_w$, liegt nach Schritt a) im Bereich von 500 g/mol bis 30.000 g/mol, bevorzugt von 1.000 g/mol bis 20.000 g/mol und besonders bevorzugt von 2.000 g/mol bis 15.000 g/mol.

Am Ende von Schritt a) wird der Feststoff durch Sedimentation abgetrennt und zum Beispiel mit Lösungsmittel gewaschen. Die Abtrennung erfolgt bei einer Temperatur, bei der das Polymere in der Reaktionsmischung flüssig oder gelöst vorliegt. Im allgemeinen liegen diese Temperaturen bei 50 °C bis 300 °C. Die Abtrennung des Feststoffes in Schritt b) muß nicht immer vollständig sein, da geringe Feststoffmengen die Polymerisation in Schritt c) oft nicht nennenswert stören. Die Abtrennung des Feststoffes liegt typischerweise bei 50 % bis 100 %, bevorzugt bei 90 % bis 99.9 %.

Die vom Feststoff befreite Reaktionsmischung wird dann in Schritt c) weiter polymerisiert. Die Molekulargewichte der Polymeren nach Schritt c) liegen über denen in Schritt a) und betragen 1.000 g/mol bis 500.000 g/mol, bevorzugt 2.000 g/mol bis 300.000 g/mol und besonders bevorzugt 3.000 g/mol bis 100.000 g/mol.

Es ist auch möglich vor Schritt c) die Konzentration der Polymere zu erhöhen, indem der Sedimentatorklarlauf durch Verdampfen von Lösungsmittel und anderer flüchtiger Komponenten eingeengt wird. Es hat sich als vorteilhaft erwiesen, die Aufkonzentration bis auf einen Polymergehalt von 20 bis 70 Gewichtsprozent, bevorzugt von 30 bis 60 Gewichtsprozent durchzuführen.

Außerdem können zwischen Schritt b) und c) bis zu 20 Molprozent, bevorzugt 0,5 bis 5 Molprozent bezogen auf die in Schritt a) eingesetzte Stoffmenge eines der Monomere zugesetzt werden, um im Falle einer Copolymerisation, einer Polykondensation oder einer Polyaddition eine möglichst genaue stöchiometrische Äquivalenz zwischen den Monomeren zu gewährleisten. Schließlich können durch Durchleiten von Wasserdampf flüchtige Komponenten aus dem Gemisch entfernt werden, um unerwünschte Bestandteile zu entfernen.

Das erfindungsgemäße Trennverfahren wird am Beispiel der Trennung von ungelöstem Natriumchlorid von Polyphenylensulfid (PPS) gelöst in N-Methylpyrrolidon beschrieben, ohne darauf beschränkt zu sein.

Eine Suspension von Natriumchlorid in einer homogenen Lösung von PPS in NMP wird erhalten, indem nach dem Stand der Technik para-Dichlorbenzol (DCB) mit Natriumsulfidhydrat in NMP bei 180 °C bis 280 °C zur Reaktion gebracht wird. In einer bevorzugten Ausführungsform der Erfindung führt man die Reaktion bei 220 °C bis 250 °C in einem kontinuierlichen Rührkessel, einer Rührkesselkaskade oder einer Kombination aus Rührkessel und einem Strömungsrohrreaktor durch. Die Monomere und das Lösungsmittel werden dem Reaktionssystem kontinuierlich zugeführt und Reaktionsmischung ebenfalls kontinuierlich aus dem Reaktionssystem ausgeschleust.

Der Umsatz der Monomere Natriumsulfid und DCB in der ausgeschleusten Reaktionsmischung beträgt über 50 %. Die Reaktionsmischung enthält als Hauptbestandteile Lösungsmittel, homogen gelöstes PPS und unlösliches Natriumchlorid. Als Nebenbestandteile kann die Lösung nicht umgesetzte Monomere, Wasser und nach dem Stand der Technik bekannte Reaktionspromotoren enthalten. Als solche Promotoren sind unter anderen die Acetate oder Halogenide von Alkali- oder Erdalkalimetallen bekannt, beispielsweise Lithiumchlorid oder Natriumacetat. Unter Bedingungen, die für die technische Herstellung von PPS typisch sind, liegt das molare Verhältnis von NMP zu Sulfid bei NMP/S = 1 bis 10, bevorzugt bei NMP/S = 2 bis 5. Der Volumenanteil des Natriumchlorids in der Reaktionsmischung beträgt V(Feststoff)/V(Gesamt) = 0,05 bis 0,25, bevorzugt bei 0,1 bis 0,2.

Die Reaktionsmischung wird unter der Wirkung der Schwerkraft, einer Druckdifferenz oder mittels einer Pumpe der Sedimentationsvorrichtung zugeführt.

Sie wird bei einer Temperatur von 180 °C bis 280 °C, bevorzugt 220 °C bis 250 °C, betrieben. Der Betriebsdruck des Sedimentationsbehälters wird bestimmt durch den Dampfdruck der Reaktionsmischung bei der Betriebstemperatur. Er beträgt 0 bis 15 barü (bar Überdruck), bevorzugt 1 bis 5 barü.

Die Abtrennung des Feststoffes aus der Reaktionsmischung in Schritt b) erfolgt bei einem Reaktionsumsatz bezogen auf die aromatische Dihalogenverbindung von 50 % bis 98 %, bevorzugt bei 50 % bis 96 %, besonders bevorzugt bei 60 % bis 94 %.

Gewöhnlich wird während der Reaktion unter Schritt a) chemisch gebundenes Hydratwasser freigesetzt. Für die Sedimentation in Schritt b) kann es vorteilhaft sein, das Reaktionswasser ganz oder teilweise zu entfernen. Wahlweise kann vor der Abtrennung des Feststoffes der Reaktorinhalt durch Zugabe von Säuren neutral oder schwach sauer gestellt werden. Geeignete Säuren sind zum Beispiel Essigsäure, Salzsäure oder Kohlendioxid.

Befindet sich die zu trennende Mischung nahe an ihrem Siedepunkt, so kann sie vor dem Eingang in den Sedimentator etwas abgekühlt oder mit Lösungsmittel verdünnt werden, um die Bildung von Dampfblasen in dem Sedimentator zu vermeiden.

Der Sedimentationsrückstand wird zweckmäßigerweise mit Lösungsmittel gewaschen, um anhaftende Mutterlaugenreste zu entfernen. Bevorzugt findet der Waschprozeß im Sedimentator selbst statt. Der mit Lösungsmittel ausgetragene Feststoff wird getrocknet, um anhaftende Lösemittelreste zurückzugewinnen. Als Resultat dieser Trennoperation erhält man Natriumchlorid als Feststoff und das Polymer gelöst in dem Sedimentatorüberlauf.

Es ist auch möglich, vor Schritt c) überschüssige Dihalogenverbindung ganz oder teilweise zu entfernen. Dies kann zum Beispiel dadurch erreicht werden, daß der Sedimentatorüberlauf auf den Kopf einer mehrstufigen Kolonne gegeben wird, die auf einen Verdampfer aufgesetzt wird. Aus dem Verdampfer wird die aufkonzentrierte und von Dihalogenverbindung weitgehend befreite Polymerlösung abgezogen. In dem Verdampfer wird ein Teil des Lösungsmittels verdampft und der Lösungsmitteldampf streicht im Gegenstrom durch die Kolonne, wodurch solche Verbindungen, die flüchtiger sind als das Lösungsmittel, entfernt werden.

Die Reaktionsbedingungen für die weitere Polymerisation in Schritt c) können in weiten Grenzen variiert werden. So können die Reaktionstemperaturen zwischen 180 °C und 290 °C liegen, bevorzugt sind 230 °C bis 270 °C. Die Reaktionszeiten können 10 Minuten bis 10 Stunden betragen, bevorzugt sind 20 min bis 2 Stunden. Für die Fortsetzung der Polymerisation in Schritt c) können wahlweise zusätzlich Maßnahmen getroffen werden, die nach dem Stand der Technik zur Erzielung möglichst hoher Molmassen führen. Dazu zählt beispielsweise der Zusatz von Promotoren. Als solche Promotoren sind zum Beispiel Alkali- und Erdalkalisalze niederer Carbonsäuren bekannt, insbesondere Natriumacetat. Es ist ebenfalls möglich, in Schritt c) definierte Mengen Wasser zuzusetzen, um nach dem Stand der Technik die weitere Polymerisation in einem zweiphasigen Reaktionssystem zu führen. Schließlich können weitere Zusatzstoffe wie Säuren wie Essigsäure oder Schwefelwasserstoff oder Kohlendioxid zugesetzt werden, um die Basenstärke des Systems einzustellen.

Für die Isolierung des Polymeren stehen verschiedene Methoden zur Verfügung. Die Abtrennung des Polymeren erfolgt zum Beispiel durch Kristallisation und anschließende einfache Druckfiltration. Aber auch andere Verfahren zur Abtrennung von Feststoffen aus Flüssigkeiten können eingesetzt werden, wie Zentrifugieren oder Dekantieren. Es ist auch möglich, die entstandene Suspension in einer Entspannungsverdampung oder Sprühtrocknung aufzuarbeiten. Dabei werden Lösungsmittel und weitere niedermolekulare Substanzen als Hauptbestandteile dampfförmig abgezogen, das Polymer fällt als weitgehend trockener Feststoff an.

Eine weitere Möglichkeit ist das Eindampfen der Polymerlösung bis zur Polymerschmelze.

Die Erfindung betrifft weiter eine Vorrichtung zur Trennung mindestens eines gelösten Polymeren von Feststoffen mit mindestens einem Sedimentator, wobei der Feststoff durch Sedimentation abgetrennt wird und der sedimentierende Feststoff im Gegenstrom mit einem Lösungsmittel gewaschen wird. Mit mindestens einem Sedimentator werden sehr gute Ergebnisse erzielt. Die erfindungsgemäße Vorrichtung ist für die Trennung von schwefelhaltigen Polymeren, insbesondere von Polyphenylensulfid von Feststoffen geeignet.

Erfindugsgemäß ist auch eine Apparatur zur Herstellung mindestens eines Polymeren in einem Lösungsmittel vorgesehen, wobei

a) ein Polymer mit niedrigem Molekulargewicht hergestellt wird,
b) der in der Reaktionsmischung ungelöste Feststoff in einer Vorrichtung mit mindestens einem Sedimentator abgetrennt wird und
c) die vom Feststoff befreite Mischung bis zum Erreichen eines bestimmten Molekulargewichtes weiter polymerisiert wird.

Mit der Apparatur werden sehr gute Ergebnisse insbesondere bei schwefelhaltigen Polymeren, ganz besonders bei Polyphenylensulfid erzielt.

Das Verfahren gemäß der Erfindung wird im folgenden anhand einer Zeichnung und von Beispielen näher erläutert.

**Zeichnung**

Die Zeichnung besteht aus den Abbildungen 1 bis 4.

Abb. 1: zeigt beispielhaft eine Ausführungsform des Sedimentators zur Durchführung des erfindungsgemäßen Verfahrens,
Abb. 2: zeigt einen Ausschnitt des Sedimentators nach Abb. 1,
Abb. 3: zeigt eine weitere Ausführungsform eines Sedimentators,
Abb. 4: zeigt eine Anlage zur Herstellung von Polymeren und zur Abtrennung von Feststoffen aus Polymerlösungen.

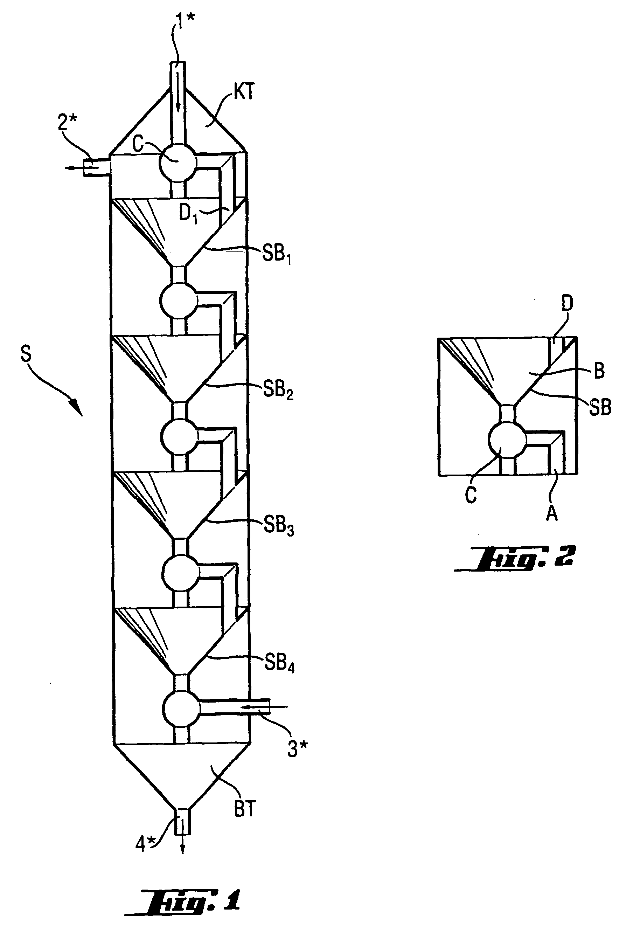

Beschreibung der Abbildungen 1 und 2

Das Bodenteil (BT) des Sedimentators (S) gemäß Abb. 1 ist trichterförmig aufgebaut und mündet in einen Abfluß, der gleichzeitig den Feststoffausgang (4*) des Sedimentators (S) darstellt. Das Kopfteil (KT) enthält einen Eingang für die Fest-/Flüssigmischung (1*), der mit einer Mischkammer (C) verbunden ist. Das Kopfteil (KT) enthält weiter einen Ausgang (2*) für den Überstand des Sedimentators (S). Der Sedimentator (S) enthält vier Sedimentationsböden ($SB_1$, $SB_2$, $SB_3$ und $SB_4$ von oben nach unten).

Ein Sedimentationsboden (SB) gemäß Abb. 2 enthält einen Sedimentationstrichter (B), eine Mischkammer (C) und eine Überstandsrückführung (D). In der Mischkammer (C) werden die Waschflüssigkeit aus der Waschflüssigkeitszuführung (A) und der Sedimentenablauf des Sedimentationstrichters (B) zusammengeführt und gemischt. Die Waschflüssigkeitszuführung (A) und Überstandsrückführung (D) sind miteinander verbunden. Dabei ist die Überstandsrückführung (D) eines Sedimentationsbodens ($SB_n$) mit der Waschflüssigkeitszuführung (A) des darüberliegenden Sedimentationsbodens ($SB_{n-1}$) verbunden. Die Leitung (3*) für die Waschflüssigkeitszuführung (A) des untersten Sedimentationsbodens ($SB_4$) wird nach außen geführt. Durch diese Leitung erfolgt die Waschflüssigkeitszuführung für den Sedimentator (S). Die Überstandsrückführung (D1) des obersten Sedimentationsbodens ($SB_1$) wird mit der Mischkammer (C) des Kopfteils verbunden.

Die Vorrichtung enthält mindestens einen Sedimentator, wobei ein Sedimentator n Sedimentationsböden enthält und n eine ganze Zahl > 1 bedeutet. Die Vorrichtung enthält mindestens ein Kopfteil (KT), mindestens ein Bodenteil (BT) und dazwischen n Sedimentationsböden.

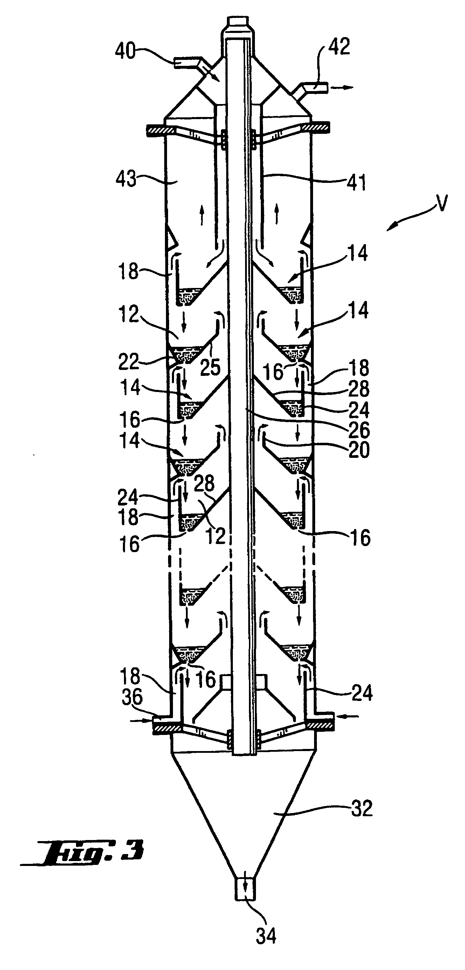

Beschreibung der Abbildung 3

Ein länglicher Behälter V enthält eine Vielzahl von Sedimentationskammem 12. Der Behälter V kann verschiedene Längen aufweisen. In der vorliegenden schematischen Darstellung ist der Behälter V, wie durch die gestrichelten Linien angezeigt, unvollständig dargestellt. Die einzelnen Sedimentationskammem 12 weisen Böden 14 auf und sind durch ringförmige Wandelemente 22, 24, 25, 28 begrenzt bzw. unterteilt. Wird nun ein zu trennender Stoff mit einer ersten und einer zweiten Stoffkomponente durch eine Öffnung 40 in den Behälter V eingeleitet, so tritt dieser nach Durchgang durch ein mittiges Einlaufrohr 41 zunächst in die oberste Sedimentationskammer 12 ein und sedimentiert unter Einfluß eines Gravitationsfeldes. Dabei entsteht eine schwere Phase mit der einen Stoffkomponente, die ein Sediment bildet, und eine leichte Phase, die aus einem Waschfluid und der anderen Stoffkomponente besteht und nach oben strömt. Das Sediment sammelt sich in der trichterförmigen Sedimentationskammer 12 und strömt durch eine als Spalt ausgebildete, ringförmige Öffnung 16 in dem Boden 14. Die jeweilige Sedimentationskammer 12 ist durch ringförmige Wandelemente 24, 28 bzw. 22, 25 gebildet und seitlich begrenzt. Die spaltförmige Öffnung 16 bewirkt die Ausbildung eines relativ dünnen Sedimentfilmes, welcher sich in Richtung der Gravitationskraft ausbreitet. Der Sedimentfilm strömt anschließend in die nächste Sedimentationskammer 12, so daß der Vorgang des Bildens eines Sedimentfilmes sequentiell wiederholbar ist.

An der Unterseite des Behälters V ist ein ringförmiger Zufluß 36 für ein Waschfluid vorgesehen. Das Waschfluid wird von unten nach oben durch den Behälter V geleitet, so daß sich eine Gegenströmung in bezug auf den zu trennenden Stoff ausbildet. Durch eine geeignete Strömungseinrichtung wird erreicht, daß das Waschfluid den an den Böden 14 durch die Öffnungen 16 abgeleiteten Sedimentfilm quer anströmt, wobei der Sedimentfilm durchströmt wird und dabei zumindest teilweise eine Verdrängung der zweiten Stoffkomponente aus dem Sedimentfilm erfolgt. Das Strömungsverhalten ist durch Pfeile veranschaulicht.

In dem Behälter V ist zentral ein Träger 26 axial verschiebbar und drehbar gelagert, der von oben durch einen nicht dargestellten Motor antreibbar ist. An dem Träger sind radial innenliegende Wandelemente 25, 28 angebracht. Diese Wandelemente 25, 28 beeinflussen zusammen mit weiteren an dem Behälter V angeordneten Wandelementen 22, 24 das Strömungsverhalten der durch den Behälter V geleiteten Substanzen. Insbesondere bildet ein zylindrisches radial außenliegendes Wandelement 24 zusammen mit dem Behälter V einen äußeren Kanal 18 für das Waschfluid, während ein innerer Kanal 20 der angrenzenden Sedimentationskammem 12 durch ein radial innenliegendes Wandelement 25 und den rohrförmigen Träger 26 gebildet ist. Die kolonnenartig angeordneten Sedimentationskammem 12 weisen abwechselnd den äußeren Kanal 18 und den inneren Kanal 20 auf, so daß ein im Querschnitt mäanderförmiges Strömen des Waschfluides erzeugt wird. Um in den Sedimentationskammem 12 ein Fördern des Sedimentes zu den Öffnungen 16 zu unterstützen, weisen die Wandelemente 22, 25, 28 konisch ausgebildete Bereiche auf.

Das durch einen äußeren Kanal 18 geleitete Waschfluid strömt von außen radial nach innen und trifft quer auf einen Sedimentfilm, der im wesentlichen parallel zur Mittenachse aus der ringförmigen Öffnung 16 eines Bodens 14 ausströmt. Der Sedimentfilm wird im wesentlichen durchströmt, wobei mindestens eine Stoffkomponente zumindest teilweise verdrängt wird. Nachfolgend strömt das Waschfluid im wesentlichen entlang der Unterseite des Bodens 14 durch den inneren Kanal 20 zu den darüberliegenden Sedimentationskammem 12. Nach dem Austritt aus dem inneren Kanal 20 stellt sich wiederum eine Querströmung ein, durch welche der ringförmige Sedimentfilm der darüberliegenden Sedimentationskammer 12 nunmehr von innen radial nach außen durchströmt wird. Nach Durchtritt durch den obersten, äußeren Kanal 18 strömt das Waschfluid mit der ausgewaschenen Stoffkomponente in eine Beruhigungszone 43 ein, in welcher ein abschließender Sedimentationsvorgang stattfinden kann. Aus dieser Beruhigungszone 43 wird das Waschfluid mit der zumindest einen angereicherten Stoffkomponente über eine Austrittsöffnung 42 abgeleitet.

Der untere Bereich 32 des Behälters V ist konisch ausgebildet. Zur Entnahme der im unteren Bereich eingetroffenen Stoffkomponente ist eine Öffnung 34 in dem kegelartigen Behälterabschnitt 32 vorgesehen.

Diese Vorrichtungen gemäß Abbildung 1 bis 3 erlauben auch eine vollkontinuierliche Arbeitsweise, da sowohl der Feststoffaustrag, als auch der Waschprozeß zur Entfernung von Mutterlaugenresten voll kontinuierlich gestaltet werden kann.

**Beispiele**

Beispiel 1

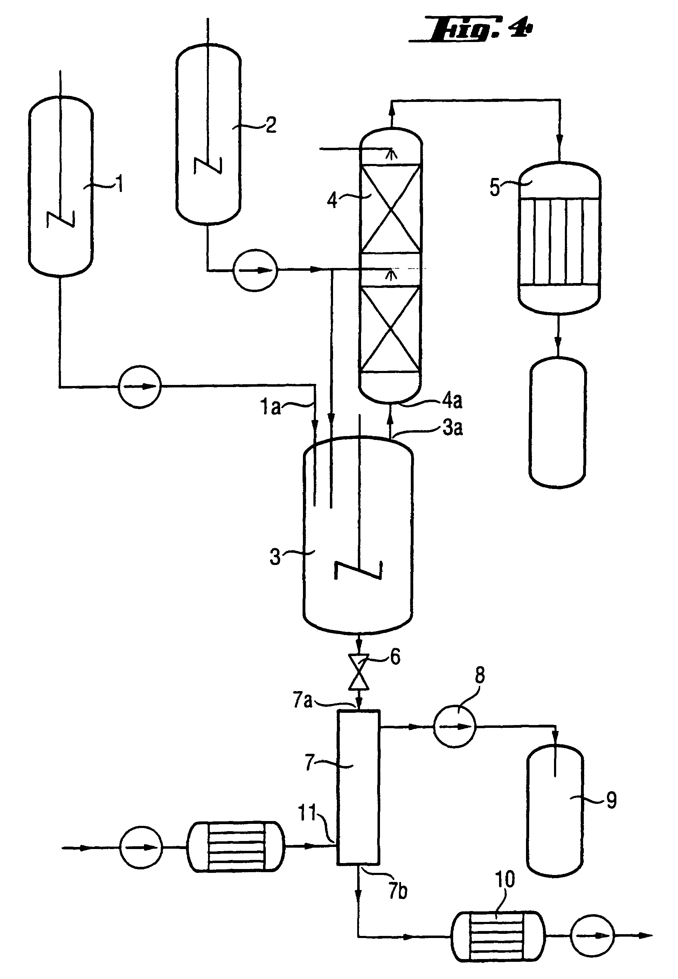

Für die Durchführung des Beispiels 1 wurde eine Anlage gemäß Abbildung 4 verwendet. In einem 100 l Rührkessel (2) aus Edelstahl wurden 38,5 kg Natriumsulfid (61 %, 301 mol) und 25 kg NMP (253 mol) vorgelegt. Das Gemisch wurde mit Stickstoff inertisiert und unter Rühren aufgeheizt. Das molare Verhältnis von Sulfid zu NMP im ersten Reaktionsgefäß (2) betrug 1,19 (S/NMP). Bei 150 °C bis 170 °C bildete sich eine homogene Lösung des Sulfids in NMP. In einem beheizten Vorlagegefäß (1) wurden 48 kg DCB (327 mol) und 16 kg NMP vorgelegt. In einem 200 l Titan-Rührkesselreaktor (3) wurden 55 kg NMP vorgelegt und unter Rühren auf 210 °C erwärmt. Bei dieser Temperatur wurde damit begonnen, die DCB/NMP-Lösung direkt über ein abgetauchtes Rohr (1a) in den Reaktor (3) zu pumpen. Die Lösung aus Sulfid und NMP wurde aus dem ersten Edelstahl-Reaktionsgefäß (2) von oben in eine Titan-Kolonne (4) gepumpt. Die Titan-Kolonne (4) war mit einer Packung aus Titan-Profilblechen versehen. Der Boden (4a) der Kolonne (4) war offen und direkt an den Dom (3a) des Titanreaktors (3) geflanscht. Über ein Druckhalteventil wurde der Druck im Reaktor (3) und der Waschkolonne (4) auf 4 bara konstant gehalten. Dabei wurde der Reaktor (3) weiter beheizt und die Reaktortemperatur schließlich auf 234 °C konstant gehalten. Das entweichende Dampfgemisch wurde im Kondensator (5) kondensiert. Es entmischte in eine DCB-reiche Unterphase und eine wasserreiche Oberphase. Die schwere Phase wurde in den Titan-Reaktor (3) zurückgepumpt. Die leichte Oberphase des kondensierten Dampfgemischs wurde nach Abschluß des Versuchs gewogen und analysiert. Sie enthielt 12,2 kg Wasser und 6,2 kg NMP.

Die Zugabe der Monomere war nach 2 Stunden beendet. Das molare Verhältnis von NMP zum eingesetzten Sulfid im zweiten Reaktionsgefäß (3) betrug 3,22; dies entspricht einer Polymerkonzentration von 25 Gewichtsprozent in NMP. Es wurde noch eine Stunde bei 234 °C nachgerührt. Anschließend wurde durch Öffnen des Bodenventils (6) die Reaktionsmischung einer Sedimentationsvorrichtung nach Abbildung 1 mit einem Durchmesser von 125 mm zugeführt.

Der Sedimentatoreingang (7a) war direkt über ein absteigendes Rohr mit dem Bodenventil (6) des Reaktors (3) verbunden. Der Sedimentatorüberlauf wurde mittels einer Pumpe (8) mit einer Förderrate von 70 l/h in einen Auffangbehälter (9) gepumpt. Am Sedimentatorboden (7b) wurde das Salz/NMP Gemisch über einen Kühler (10) so abgepumpt, daß das Bodenteil am unteren Ende des Sedimentators (7) stationär zu etwa 70% mit Salz gefüllt blieb. In den Lösungsmitteleinlaß (11) wurde auf 230 °C erhitztes NMP unter Druck mit der selben volumetrischen Förderrate zugepumpt, mit der das Salz/NMP Gemisch abgepumpt wurde.

Der gesamte Reaktorinhalt wurde dem Sedimentator (7) zugeführt. Danach wurde der Sedimentator (7) über den Lösungsmitteleinlaß (11) noch mit 5 Liter NMP gespült. Anschließend wurde die Reaktionsmischung im Auffangbehälter (9) abgekühlt. Die Polymerkonzentration im Auffangbehälter (9) betrug mehr als 20 Gewichtsprozent. Das Präpolymer wurde im Auffangbehälter (9) ausgefällt und der Auffangbehälter (9) auf bei 80 °C auf eine Filternutsche entleert. Es wurde von der Mutterlauge abfiltriert, mit Wasser gewaschen und getrocknet. Die Ausbeute an Präpolymer betrug 30,8 kg (95 % der Theorie).

## Patentansprüche

1. Verfahren zur Trennung mindestens eines gelösten Polymeren von mindestens einem Feststoff, wobei der Feststoff durch Sedimentation abgetrennt wird und der sedimentierende Feststoff im Gegenstrom mit einem Lösungsmittel gewaschen wird.

2. Verfahren nach Anspruch 1, wobei der Vorgang des Sedimentierens und Waschens in einer Vielzahl von Schritten oder Stufen wiederholt wird.

3. Verfahren nach Anspruch 1 oder 2, wobei die Polymerkonzentration in der mit dem Feststoff ausgetragenen Flüssigkeit kleiner als 10 %, bevorzugt kleiner als 5 % der Eingangskonzentration ist.

4. Verfahren nach einem oder mehreren der Ansprüche 1 bis 3, wobei die Sedimentation des unlöslichen Feststoffes bei Temperaturen zwischen 50 °C und 300 °C und bei Drücken bei 0 bar bis 50 bar erfolgt.

5. Verfahren nach einem oder mehreren der Ansprüche 1 bis 4, wobei die Polymerkonzentration des Sedimentatorüberlaufs größer 50 %, bevorzugt größer 70 % der Eingangskonzentration beträgt.

6. Verfahren nach einem oder mehreren der Ansprüche 1 bis 5, wobei die Trennung in einer Vorrichtung mit mindestens einem Sedimentator durchgeführt wird.

7. Verfahren zur Herstellung von Polymeren in einem Lösungsmittel, wobei

   a) ein Polymer mit niedrigem Molekulargewicht hergestellt wird,
   b) der in der Reaktionsmischung ungelöste Feststoff durch Sedimentation abgetrennt wird und
   c) die vom Feststoff befreite Mischung bis zum Erreichen eines bestimmten Molekulargewichtes weiter polymerisiert wird.

8. Verfahren nach Anspruch 7, wobei das Molekulargewicht des Polymeren in Schritt a) im Bereich von 500 g/mol bis 30.000 g/mol, bevorzugt von 1.000 g/mol bis 20.000 g/mol und besonders bevorzugt von 2.000 g/mol bis 15.000 g/mol liegt.

9. Verfahren nach einem oder mehreren der Ansprüche 1 bis 8, wobei das Polymer ein schwefelhaltiges Polymer ist.

10. Verfahren nach Anspruch 9, wobei das Polymer Polyphenylensulfid ist.

11. Verfahren nach Anspruch 10, wobei die Abtrennung des Feststoffes aus der Reaktionsmischung in Schritt b) bei einem Reaktionsumsatz bezogen auf eines der Monomere von 50 % bis 98 %, bevorzugt bei 50 % bis 96 %, besonders bevorzugt bei 60 % bis 94 % erfolgt.

12. Vorrichtung zur Trennung mindestens eines gelösten Polymeren von Feststoffen mit mindestens einem Sedimentator, wobei der Feststoff durch Sedimentation abgetrennt wird und der sedimentierende Feststoff im Gegenstrom mit einem Lösungsmittel gewaschen wird.

**13.** Vorrichtung nach Anspruch 12, wobei das Polymer ein schwefelhaltiges Polymer, insbesondere Polyphenylensulfid ist.

**14.** Apparatur zur Herstellung mindestens eines Polymeren in einem Lösungsmittel, wobei

d) ein Polymer mit niedrigem Molekulargewicht hergestellt wird,
e) der in der Reaktionsmischung ungelöste Feststoff in einer Vorrichtung mit mindestens einem Sedimentator abgetrennt wird und
f) die vom Feststoff befreite Mischung bis zum Erreichen eines bestimmten Molekulargewichtes weiter polymerisiert wird.

**15.** Apparatur nach Anspruch 14, wobei das Polymer ein schwefelhaltiges Polymer, insbesondere Polyphenylensulfid ist.

**16.** Verwendung einer Vorrichtung mit mindestens einem Sedimentators zur Trennung mindestens eines gelösten Polymeren von mindestens einem Feststoff, wobei der Feststoff durch Sedimentation abgetrennt wird und der sedimentierende Feststoff im Gegenstrom mit einem Lösungsmittel gewaschen wird.

**Claims**

**1.** A process for separating at least one dissolved polymer from at least one solid, wherein the solid is separated off by sedimentation and the sedimented solid is washed in countercurrent with a solvent.

**2.** A process as claimed in claim 1, wherein the sequence of sedimentation and washing is repeated in a plurality of steps or stages.

**3.** A process as claimed in claim 1 or 2, wherein the polymer concentration in the liquid discharged with the solid is less than 10%, preferably less than 5%, of the concentration at the inlet.

**4.** A process as claimed in one of more of claims 1 to 3, wherein the sedimentation of the insoluble solid occurs at temperatures of from 50°C to 300°C and pressures of from 0 bar to 50 bar.

**5.** A process as claimed in one or more of claims 1 to 4, wherein the polymer concentration in the overflow from the sedimentation apparatus is greater than 50%, preferably greater than 70%, of the concentration at the inlet.

**6.** A process as claimed in one or more of claims 1 to 5, wherein the separation is carried out in an apparatus comprising at least one sedimentation apparatus.

**7.** A process for preparing polymers in a solvent, wherein

a) a polymer having a low molecular weight is prepared,
b) the solid which is undissolved in the reaction mixture is separated off by sedimentation and
c) the mixture which has been freed of the solid is polymerized further until a particular molecular weight has been reached.

**8.** A process as claimed in claim 7, wherein the molecular weight of the polymer in step a) is in the range from 500 g/mol to 30,000 g/mol, preferably from 1000 g/mol to 20,000 g/mol and particularly preferably from 2000 g/mol to 15,000 g/mol.

**9.** A process as claimed in one or more of claims 1 to 8, wherein the polymer is a sulfur-containing polymer.

**10.** A process as claimed in claim 9, wherein the polymer is polyphenylene sulfide.

**11.** A process as claimed in claim 10, wherein the solid is separated from the reaction mixture in step b) at a reaction conversion based on one of the monomers of from 50% to 98%, preferably from 50% to 96%, particularly preferably from 60% to 94%.

**12.** An apparatus for separating at least one polymer in a solution from solids comprising at least one separation apparatus, wherein the solid is separated off by sedimentation and the sedimented solid is washed in countercurrent with a solvent.

**13.** An apparatus as claimed in claim 12, wherein the polymer is a sulfur-containing polymer, in particular polyphenylene sulfide.

**14.** An apparatus for preparing at least one polymer in a solvent, wherein

a) a polymer having a low molecular weight is prepared,
b) the solid which is undissolved in the reaction mixture is separated off in an apparatus comprising at least one sedimentation apparatus and
c) the mixture which has been freed of the solid is polymerized further until a particular molecular weight has been reached.

**15.** An apparatus as claimed in claim 14, wherein the polymer is a sulfur-containing polymer, in particular polyphenylene sulfide.

16. The use of an apparatus comprising at least one sedimentation apparatus for separating at least one dissolved polymer from at least one solid, wherein the solid is separated off by sedimentation and the sedimented solid is washed in countercurrent with a solvent.

## Revendications

1. Procédé en vue de la séparation d'au moins un polymère dissout d'au moins une substance solide, la substance solide étant séparée par sédimentation et la substance solide se sédimentant étant lavée à contre-courant à l'aide d'un solvant.

2. Procédé selon la revendication 1, la procédure de sédimentation et de lavage étant répétée dans une pluralité d'étapes ou d'étages.

3. Procédé selon la revendication 1 ou 2, la concentration en polymère dans le liquide évacué avec la substance solide étant inférieure à 10 %, de préférence, inférieure à 5 % de la concentration de départ.

4. Procédé selon l'une quelconque des revendications 1 à 3, la sédimentation de la substance solide insoluble se faisant à des températures comprises entre 50°C et 300°C et à des pressions comprises entre 0 bar et 50 bars.

5. Procédé selon l'une quelconque des revendications 1 à 4, la concentration en polymère du trop-plein du sédimentateur étant supérieure à 50 %, de préférence, supérieure à 70 % de la concentration de départ.

6. Procédé selon l'une quelconque des revendications 1 à 5, la séparation étant effectuée dans un dispositif avec au moins un sédimentateur.

7. Procédé en vue de la fabrication de polymères dans un solvant

    a) un polymère à faible poids moléculaire étant préparé,
    b) la substance solide non dissoute dans le mélange réactionnel étant séparée par sédimentation et
    c) le mélange libéré de la substance solide étant encore polymérisé jusqu'à l'atteinte d'un poids moléculaire déterminé.

8. Procédé selon la revendication 7, le poids moléculaire du polymère dans l'étape a) se situant dans le domaine de 500 g/mole jusqu'à 30 000 g/mole, de préférence, de 1 000 g/mole à 20 000 g/mole et, en particulier, de préférence, de 2 000 g/mole à 15 000 g/mole.

9. Procédé selon l'une quelconque des revendications 1 à 8, le polymère étant un polymère contenant du soufre.

10. Procédé selon la revendication 9, le polymère étant le sulfure de polyphénylène.

11. Procédé selon la revendication 10, la séparation de la substance solide hors du mélange réactionnel dans l'étape b) se faisant pour un rendement de réaction, rapporté à l'un des monomères, de 50 % à 98 %, de préférence, de 50 % à 96 %, en particulier, de préférence, de 60 % à 94 %.

12. Dispositif en vue de la séparation d'au moins un polymère dissout de substances solides avec au moins un sédimentateur, la substance solide étant séparée par sédimentation et la substance solide se sédimentant étant lavée à contre-courant à l'aide d'un solvant .

13. Dispositif selon la revendication 12, le polymère étant un polymère contenant du soufre, en particulier le sulfure de polyphénylène.

14. Appareillage en vue de la fabrication d'au moins un polymère dans un solvant,

    d) un polymère à faible poids moléculaire étant préparé,
    e) la substance solide non dissoute dans le mélange réactionnel étant séparée dans un dispositif avec au moins un sédimentateur et
    f) le mélange libéré de la substance solide étant encore polymérisé jusqu'à l'atteinte d'un poids moléculaire déterminé.

15. Appareillage selon la revendication 14, le polymère étant un polymère contenant du soufre, en particulier le sulfure de polyphénylène.

16. Utilisation d'un dispositif avec au moins un sédimentateur en vue de la séparation d'au moins un polymère dissout d'au moins une substance solide, la substance solide étant séparée par sédimentation et la substance solide se sédimentant étant lavée à contre-courant à l'aide d'un solvant.

*Fig. 1*

*Fig. 2*

10

**Fig. 3**

Fig. 4